# FASCICULE DE BREVET EUROPEEN

(11) **EP 1 481 846 B1**
(45) Date de publication et mention de la délivrance du brevet: **10.03.2010**
(21) Numéro de dépôt: 04291312.9
(22) Date de dépôt: 24.05.2004
(51) Int. Cl.: B60Q 1/10, B60Q 1/12

(54) **Dispositif projecteur muni d'un système de détermination de position ou de variation de position**
Scheinwerferanordnung mit System zur Bestimmung der Lage oder der Lageänderung
Headlamp device comprising a system for determining a position or a variation of position

(30) Priorité: 27.05.2003 FR 0306456
(43) Date de publication de la demande: 01.12.2004
(73) Titulaire: VALEO VISION, 93012 Bobigny Cedex (FR)
(72) Inventeur: Chave, Rémy, 75007 Paris (FR); L'Hermine, Alban, 75005 Paris (FR); Dari, Alain, 94120 Fontenay sous Bois (FR); Uhrich, Arnaud, 75015 Paris (FR)

(56) Documents cités:
- DE-A- 19 716 985
- FR-A- 2 822 425
- US-A1- 2002 190 709
- THIEMANN M ET AL: "NEUE KONZEPTE DER AUTOMATISCHEN LEUCHTWEITEREGELUNG AUF BASIS EINESINNOVATIVEN, INDUKTIVEN DREHWINKEL-SENSORS" ATZ AUTOMOBILTECHNISCHE ZEITSCHRIFT, FRANCKH'SCHE VERLAGSHANDLUNG. STUTTGART, DE, vol. 100, no. 11, 1 novembre 1998 (1998-11-01), pages 820-822,824-826, XP000782801 ISSN: 0001-2785

## Description

La présente invention concerne un module d'éclairage, ou dispositif projecteur, muni d'un système de détermination de position ou de variation de position en rotation. Le dispositif selon l'invention est utilisé dans le domaine des projecteurs de véhicule. Le dispositif selon l'invention comporte un moyen de mesure permettant entre autres, de limiter au maximum un temps d'une phase d'initialisation ou de référencement au moment de la mise sous tension du dispositif. Pendant cette phase d'initialisation, le dispositif projecteur se place dans une position qui lui sert de référence pour ses déplacements ultérieurs dans l'espace. Le dispositif projecteur selon l'invention supprime des mouvements gênants de cette phase d'initialisation.

L'invention trouve une application particulièrement avantageuse, mais non exclusive, pour mesurer ou déterminer une position d'un dispositif projecteur rotatif d'un véhicule automobile. Grâce à l'invention, on peut notamment ajuster une position d'un projecteur rotatif en fonction d'un déplacement de véhicule. D'une manière plus générale, l'invention pourrait convenir à tous les dispositifs d'éclairage montés sur des véhicules comme des motos, des trains, des bateaux ou des avions.

On sait que, notamment dans le domaine des véhicules automobiles, on réalise des dispositifs projecteurs possédant une direction d'éclairage variable. Cette direction d'éclairage variable permet par exemple au véhicule de s'adapter à une courbure de la route ou de procéder à une correction d'assiette. L'adaptation à la courbure de la route ou la correction d'assiette procure au conducteur une sensation de sécurité optimale.

Aujourd'hui, les dispositifs projecteurs existant comportent souvent des actionneurs pas à pas ou des moteurs pas à pas. A chaque mise sous tension des actionneurs, une phase d'initialisation, préalable à l'emploi de ces actionneurs, est nécessaire afin de les calibrer. Dans cette phase d'initialisation, le dispositif projecteur est amené dans une position axiale. Cette position axiale correspond à une orientation du dispositif projecteur en ligne droite et à vitesse constante. Ces actionneurs disposent généralement de butées de fin de course. Dans les phases d'initialisation habituelles, les actionneurs viennent se plaquer contre ces butées. L'actionneur se déploie ainsi sur toute sa course, jusqu'à une des butées. Cette position en butée peut être prise comme position de référence. Ensuite, un nombre de pas ou une distance est calculé à partir de cette position de référence, afin d'amener le projecteur dans la position axiale.

On connaît par exemple de l'article « Neue Konzepte der automatischen Leuchtweiteregelung auf Basis eines innovativen, induktiven Drehwinkelsensors » de la revue « ATZ Automobiltechnische Zeitschrift, Franckh'sche Verlagshandlung, Stuttgart, DE, vol 100, N° 11, pages 820-822, 824-826, un dispositif de correction de la portée des projecteurs d'un véhicule automobile en fonction de l'assiette de ce véhicule, l'information étant fournie par des capteurs inductifs.

On connaît aussi des capteurs appelés capteurs de copie ou de recopie. Pour ces capteurs, une valeur est produite et associée à la position du dispositif projecteur sur toute la plage de rotation possible du projecteur et pour chaque position du dispositif projecteur rotatif autour de son axe. On peut ainsi déterminer précisément pour chaque valeur produite la position exacte d'un projecteur.

Ces systèmes de l'état de la technique présentent néanmoins des limites. En effet, parcourir l'ensemble de la course d'un actionneur pas à pas pour obtenir une position de référence induit un mouvement intempestif du dispositif projecteur. Ce mouvement intempestif du dispositif projecteur peut conduire à une gêne ou à un éblouissement d'un automobiliste. En effet, l'automobiliste qui croise un véhicule dont le dispositif projecteur est en phase d'initialisation peut être ébloui par ce dispositif en raison de la nature aléatoire d'une orientation du dispositif projecteur au moment de la phase d'initialisation. Par ailleurs, le mouvement intempestif du dispositif projecteur nuit systématiquement à la disponibilité du dispositif. Parcourir l'ensemble de la course de l'actionneur nécessite une durée non négligeable. Cette durée peut atteindre environ trois secondes pendant lesquelles le conducteur ne contrôle pas ses projecteurs.

Quant au capteur de recopie qui donne toutes les positions possibles qu'un projecteur peut prendre, il est difficile à réaliser pour un prix raisonnable, mais il est aussi difficile à réaliser en terme de résolution et de précision. En effet, pour chaque position du dispositif projecteur, l'incertitude sur la mesure doit être très faible. Dans le cas où l'incertitude sur la mesure de la position serait trop grande, une dérive de la position du dispositif projecteur du véhicule pourrait apparaître par rapport à la courbure d'une route. Le projecteur n'éclairerait plus alors correctement la route.

La calibration en série d'un capteur de recopie est difficile et longue. Pour cette calibration de matériel, il est nécessaire de rentrer en mémoire toutes les valeurs possibles associées à toutes les positions possibles que le dispositif projecteur peut prendre.

Aussi, la présente invention a-t-elle pour but de proposer un dispositif projecteur remédiant entre autres à ces problèmes de disponibilité, de calibrage, de coût, de prévention contre l'éblouissement et de recentrage en cas de dérive des systèmes existants. Le dispositif projecteur résout ces problèmes essentiellement durant les phases d'initialisation.

A cet effet, sur un dispositif projecteur comportant une large plage de rotation autour d'une position donnée, on intègre un moyen de mesure éventuellement programmable. Ce moyen de mesure permet de mesurer une position du dispositif projecteur sur une large gamme de rotation. Cette gamme de rotation peut par exemple se décomposer en une plage limitée autour d'une position donnée et en deux plages latérales de part et d'autre de la plage limitée. L'information sur la position du dispositif projecteur donnée par la plage limitée est très précise: la plage limitée possède une forte sensibilité. En revanche, sur les plages latérales, l'information donnée sur la position du dispositif projecteur est beaucoup plus grossière: les plages latérales possèdent une sensibilité très faible.

Néanmoins, dans les plages latérales, on peut déterminer la position du dispositif projecteur suffisamment précisément pour le ramener dans une position appartenant à la plage limitée. Le fait de pouvoir ramener le module dans une plage limitée pour laquelle on connaît précisément la position du dispositif projecteur supprime le problème de mise en butée intempestive. En effet, il n'est plus nécessaire de créer des références dans l'espace au travers de cette butée : toutes les valeurs comprises dans cette plage limitée sont toutes des valeurs dépendantes d'une seule et même valeur de référence. Les valeurs de la plage limitée peuvent potentiellement toutes être considérées ou assimilées à des positions de référence.

Dans le cas où le dispositif projecteur se situe hors de la plage limitée de forte sensibilité, juste avant la phase d'initialisation, le déplacement rapide et unique du dispositif projecteur vers la plage limitée permet de prévenir des autres conducteurs d'un éblouissement éventuel par le dispositif projecteur.

Dans une réalisation particulière de l'invention, le capteur utilisé afin d'obtenir les différentes plages et des différents niveaux de sensibilité est un capteur à effet Hall. La tension obtenue en sortie du capteur à effet Hall est monotone par rapport à certaines positions angulaire du dispositif projecteur rotatif. Dans un exemple, des valeurs des tensions sont déterminées à partir d'une position de référence. Une zone linéaire de la caractéristique du capteur à effet Hall correspond à la plage limitée décrite ci-dessus. Le dispositif projecteur peut aussi se situer dans des positions associées à des plages situées de part et d'autre de la plage limitée. Dans ce cas, le capteur sature et délivre une tension constante pour chacune de ces plages. Ces plages correspondent aux plages latérales. A l'intérieur des plages latérales, on ne peut pas discerner exactement les différentes positions du dispositif projecteur. A l'intérieur des plages latérales, il est juste possible de déterminer dans quelle position extrême se situe le dispositif projecteur. On détermine alors le sens de rotation à imprimer au dispositif projecteur afin de le ramener dans la zone où la déplacement est linéaire par rapport à la tension.

L'invention concerne donc un dispositif projecteur muni d'un système de détermination de position du dispositif projecteur autour d'un axe en rotation, ce système comportant un moyen de mesure pour déterminer des valeurs de position sur la totalité d'une gamme de valeurs associées à la position du dispositif projecteur, **caractérisé en ce que** le moyen de mesure comporte dans la gamme de valeurs associées à la position du dispositif projecteur une plage de forte sensibilité et au moins une plage de faible sensibilité,

Outre les caractéristiques essentielles qui viennent d'être mentionnées dans le paragraphe précédent, le dispositif selon l'invention peut avantageusement présenter une ou plusieurs caractéristiques secondaires suivantes :
- la plage de forte sensibilité correspond à un voisinage d'une position axiale du dispositif projecteur.
- la plage de faible sensibilité correspond à une position extrême.
- le moyen de mesure produit dans la plage de forte sensibilité des valeurs de position dépendantes de la position en rotation du dispositif projecteur linéairement.
- le moyen de mesure possède une position de référence dans la plage de forte sensibilité.
- la plage de forte sensibilité du moyen de mesure correspond à un mouvement du dispositif projecteur entre plus ou moins cinq degrés autour de la position de référence.
- le moyen de mesure possède une précision de plus ou moins 0.3 degrés dans la plage de forte sensibilité.
- le moyen de mesure étant un capteur à effet Hall.
- la sonde à effet Hall comporte un registre programmable.
- le moyen de mesure comporte une résistance variable arrangée autour de l'axe de rotation, dont la valeur varie avec un mouvement d'un curseur emmené par l'axe de rotation, la résistance variable possédant une première valeur de tolérance pour un premier ensemble de positions du curseur correspondant aux plages en bord de gamme et une deuxième valeur de tolérance inférieure à la première valeur pour un deuxième ensemble de positions du curseur correspondant à la plage de forte sensibilité.
- le moyen de mesure est associé à un module programmable comportant un microprocesseur avec des mémoires ou un microcontrôleur, une des mémoires du microprocesseur ou du microcontrôleur gardant en mémoire la position de référence et/ou une table donnant des cor respondances entre des valeurs produites par le moyen de mesure et la position du dispositif projecteur.
- l'axe de rotation du dispositif projecteur est horizontal.
- l'axe de rotation du dispositif projecteur est vertical.
Un autre objet de l'invention est un véhicule automobile comportant un tel dispositif projecteur.

L'invention sera mieux comprise à la lecture de la description qui suit et à l'examen des figures qui l'accompagnent- Celles-ci ne sont présentées qu'à titre indicatif et nullement limitatif de l'invention. Les figures montrent :
- Figure 1 : Une représentation schématique d'une réalisation particulière de l'invention. Cette réalisation met en évidence différentes plages de sensibilité du capteur.
- Figure 2 : Un exemple de représentation graphique d'une caractéristique associée à un capteur à effet Hall utilisé dans une réalisation particulière de l'invention.
- Figure 3 : Une allure d'une résistance variable utilisée comme un moyen de mesure dans l'invention et comportant trois plages de sensibilité distinctes. La figure 3 montre aussi comment combiner l'utilisation d'un microcontrôleur à celle des capteurs de l'invention.

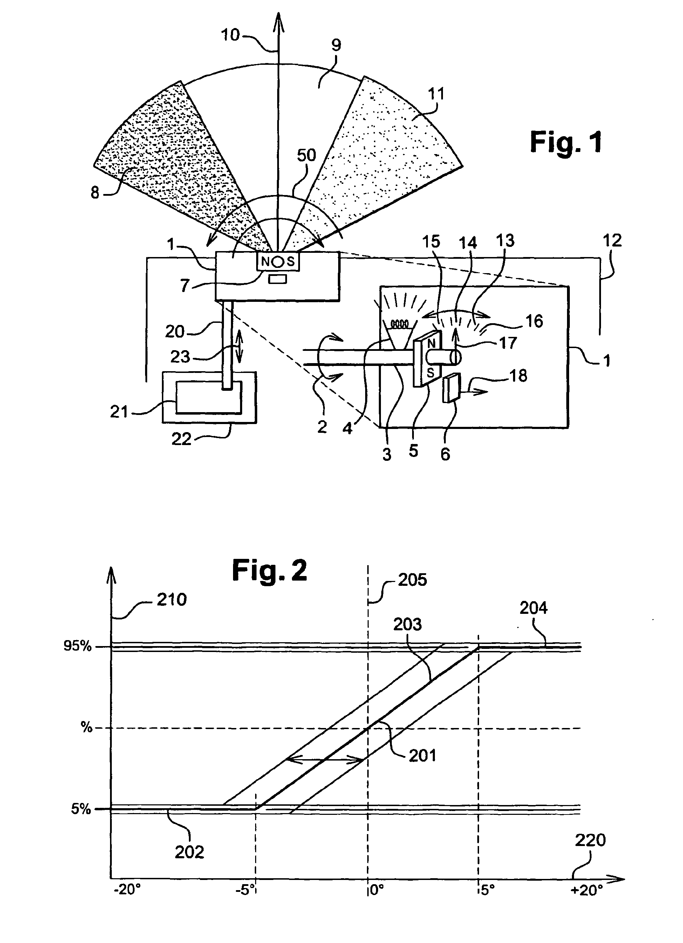

La figure 1 représente schématiquement une réalisation particulière d'un dispositif 1 projecteur muni d'un système de détermination d'une position 2 en rotation. Ce système de détermination comporte ici un capteur 6 à effet Hall couplé avec un aimant 5 fixé sur un axe 3. Ce dispositif 1 comprend par ailleurs une lampe 4 fixée elle aussi sur l'axe 3. Le dispositif 1 projecteur est monté sur un véhicule 12 automobile. Dans un exemple de réalisation, le capteur à effet Hall permet de mesurer ou de déterminer la position en rotation du dispositif 1 projecteur autour de l'axe 3.

La représentation du dispositif projecteur 1 à droite est une vue schématique et en perspective du dispositif projecteur de droite. Un axe 7 représente dans la figure 1 l'axe 3 vu de dessus.

Le mouvement 2 de rotation autour de l'axe 3 imprimé au dispositif 1 projecteur correspond au mouvement 50 de rotation autour de l'axe 7. Ce mouvement 50 est réalisé grâce à un actionneur 22, terminé par une tige 20. Cette tige se déplace dans un mouvement 23 de translation. L'actionneur 22 et le mouvement 23 de la tige sont dans un exemple commandés par un moteur 21 pas à pas. Suivant la commande fournie au moteur 21, la tige 20 tire ou pousse la lampe 4 ou l'ensemble du dispositif 1 sur un de ses diamètres extérieurs. Ces actions de poussée ou de tirée de la tige ont pour effet de faire pivoter la lampe 4 dans le mouvement 50.

Sur la figure 1, on discerne trois zones 8, 9, 11 d'éclairage liées au mouvement rotatif du dispositif projecteur 1 autour de l'axe 7. Une première zone 8 d'éclairage, correspond à une orientation du dispositif projecteur rotatif 4 lorsque le véhicule 12 empreinte une route dont la courbure est orientée vers la gauche. Dans cette zone, le dispositif 1 projecteur est orienté lui aussi vers la gauche. Une deuxième zone 9 correspond à un déplacement du véhicule en ligne droite. Cette zone 9 est répartie de part et d'autre de l'axe du véhicule 10. Une troisième zone 11 correspond à l'éclairement du dispositif 1 projecteur lorsqu'il pivote autour de l'axe 7 vers la droite. Ce pivotement correspond à une trajectoire du véhicule 12 tournant à droite.

Une phase d'initialisation se produit au moment de la mise sous tension du dispositif 1 projecteur. Cette phase coïncide en général avec le démarrage du véhicule 12. Dans cette phase d'initialisation, le dispositif projecteur se met dans une position pour laquelle un faisceau lumineux droit émis par le dispositif 1 forme un angle de quatre vingt dix degrés avec le support ou le véhicule sur lequel le dispositif 1 est monté. Dans cette phase d'initialisation, il faut déterminer où se trouve le dispositif 1 projecteur pour pouvoir ensuite le ramener dans une position préférentielle de référence. Une mesure ou une détermination d'écart angulaire permet de calculer la position du dispositif projecteur par rapport à cette position de référence.

D'une manière générale, un moyen 6 de mesure qui est ici un capteur 6 à effet Hall détermine des valeurs de position sur la totalité d'une gamme 13 de positions. Ce moyen 6 de mesure comporte dans la gamme 13 une plage 14 de forte sensibilité et au moins une plage 15 de faible sensibilité. Le capteur 6 à effet Hall mesure d'ailleurs ici les variations de position en rotation du dispositif 1 projecteur autour de l'axe 7 sur l'ensemble des zones 8, 9 et 11.

En effet, un signal électrique observable à la sortie 18 du capteur 6 à effet Hall dépend du positionnement des pôles nord et sud par rapport à ce capteur 6. Ce signal électrique permet de mesurer des positions ou des variations de position du dispositif 1 projecteur sur toute la gamme 13 de valeurs. Cette gamme 13 de valeurs associées à la position du dispositif 1 projecteur se décline en trois plages distinctes. A chaque plage correspond une des zones d'éclairement décrites précédemment. En effet, la gamme 13 se décompose en une plage 14 de forte sensibilité. Cette plage 14 permet de déterminer de manière précise le positionnement du dispositif 1 projecteur ou une variation de position angulaire du dispositif 1. Dans cet exemple, le capteur comporte deux plages 15 et 16 latérales qui se situent en bord de gamme. Ces deux plages 15 et 16 possèdent un faible sensibilité. Ces deux plages 15 et 16 permettent de déterminer grossièrement la position en rotation du dispositif 1 projecteur rotatif autour de l'axe 3. Grâce à ces plages 15 et 16, on peut savoir dans quelle position extrême se situe le dispositif 1 projecteur. Chaque plage 15 et 16 de faible sensibilité correspond en général à un ensemble de positions extrême du dispositif 1 projecteur.

De préférence, la plage 14 de forte sensibilité se situe autour d'une position axiale du module 4 d'éclairage rotatif. Cette plage 14 de forte sensibilité correspond à un voisinage d'une position 10 axiale du dispositif projecteur 1. La position 10 axiale correspond à la position dispositif 1 projecteur rotatif lorsqu'il émet une lumière dans une direction perpendiculaire au véhicule 12. Cette position axiale 10 correspond donc à une orientation du dispositif projecteur lorsque le véhicule 12 roule en ligne droite et à vitesse constante. Toutefois, on peut imaginer que la plage 14 de forte sensibilité ne se situe pas autour d'une position 10 axiale. La plage 14 peut être excentrée et la position dans l'espace du dispositif 1 projecteur associée à une valeur moyenne de la plage 14 peut faire un angle avec la position 10 axiale du dispositif projecteur 1.

Le dispositif 1 comporte en outre une position 17 de référence. Cette position 17 peut correspondre à la position 10 axiale. Cette position 17 peut aussi être déportée, vers un des bords extrêmes de la gamme 13 de valeurs. Toutefois, cette position 17 de référence se trouve à l'intérieure de la plage 14 de forte sensibilité. En effet, dans cette plage 14, on connaît avec précision la position du dispositif 1 projecteur. Dans un exemple, la position 17 de référence correspond à une position du dispositif projecteur pour une courbure de route donnée et pour une vitesse de véhicule 12 donnée. Il est important de connaître précisément le positionnement du dispositif projecteur, pour pouvoir mesurer une position ou une variation de position du dispositif projecteur 1 par rapport à la position de référence. Au démarrage, on peut alors ensuite revenir à cette position de référence 17 et réaliser la phase d'initialisation.

Des positions du dispositif 1 projecteur ou des variations de position de l'axe 3 sont mesurées à partir de la position de référence 17. Ces mesures de position ou de variations de position correspondent à l'angle formé par un rayon de l'axe 3 aligné avec la position 17 de référence du dispositif 1 projecteur avant le déplacement du module 4 et par ce même rayon après déplacement du module. Cet angle correspond à celui entre un faisceau lumineux du dispositif projecteur et la position 17 de référence.

Le moyen 6 de mesure du dispositif projecteur qui est ici le capteur 6 à effet Hall peut être monté sur un axe vertical permettant au dispositif projecteur de s'adapter à la courbure de la route. Mais on peut aussi avoir un capteur 6 à effet Hall sur un axe horizontal lorsque le dispositif 1 projecteur est monté sur un tel axe et qu'il a pour objet de corriger l'assiette du véhicule. Pour corriger l'assiette, le capteur 6 fournit des informations de déplacement nécessaires et suffisantes pour qu'en cas d'accélération, le dispositif 1 projecteur soit orienté vers le bas pour compenser la légère montée du véhicule 12 vers le haut. En cas de décélération ou de freinage, le capteur fournit des informations afin que le dispositif 1 projecteur soit orienté vers le haut pour compenser la légère baisse du véhicule 12.

Une caractéristique de capteur 6 présentant une partie linéaire pourrait permettre de connaître précisément les variations de position ou la position exacte du dispositif 1 projecteur en limitant les déplacements du dispositif 14 projecteur lors de la phase d'initialisation.

La figure 2 donne justement une représentation graphique d'une caractéristique 201 du capteur 6 à effet Hall. Cette caractéristique 201 donne en pourcentage de la valeur maximale, la valeur délivrée en sortie 18 du capteur 6 à effet Hall. Cette valeur de tension est délivrée en fonction du déplacement angulaire en rotation autour de l'axe 3 du dispositif 1 projecteur. Le déplacement en rotation est porté sur l'axe des abscisses référencé 220.

Cette caractéristique 201 se décompose en trois parties. Une première partie 202 correspond à la plage 15 en bord de gamme. Sur cette plage 15 le capteur à effet Hall 6 délivre un signal constant pour tout un ensemble de position du dispositif 1 projecteur. Dans un exemple, le capteur à effet Hall 6 délivre un signal équivalant à cinq pourcents du signal maximum délivrable par le capteur 6 pour une plage comprise entre moins cinq degrés et plus vingt degrés.

Le moyen de mesure, ici le capteur 6 à effet Hall, produit dans la plage 14 de forte sensibilité des valeurs de position dépendantes linéairement du déplacement 2 en rotation du dispositif 1 projecteur. Le capteur 6 à effet Hall comporte en effet une surface sensible limitée. Ainsi, une zone 203 linéaire est comprise entre deux valeurs distinctes et de préférence opposée de l'angle que fait le dispositif 1 projecteur avec sa position de référence initiale.

Dans un exemple, ce comportement linéaire de la plage 203 correspond à la plage 14 de forte sensibilité composant la gamme 13 du moyen de mesure. Et de préférence, la plage 14 de forte sensibilité permet de détecter des variations du déplacement 2 en rotation du dispositif 1 projecteur entre plus 5 degrés et moins 5 degrés. Les variations se situent autour de la position 17 de référence. Cette amplitude de plage est suffisante: l'incertitude liée à l'assemblage des pièces composant le dispositif projecteur 1 ne dépasse pas ou rarement dix degrés.

Ainsi, la plage 14 de forte sensibilité du moyen 6 de mesure, ici du capteur 6 à effet Hall, correspond à un mouvement du dispositif 1 projecteur entre plus ou moins cinq degrés autour de la position de référence.

Dans un exemple, entre cinq degrés et vingt degrés, le capteur 6 à effet Hall délivre un signal 204 constant valant 95% de la valeur maximale que le capteur 6 peut délivrer. Cette partie 204 correspond à la plage 16 de faible sensibilité et en bord de gamme 13. Dans cette plage 204, comme dans la plage 202, on connaît une position extrême du pôle nord et sud de l'aimant 5 fixé à l'axe 3, mais on ne connaît pas de manière précise la position du dispositif 1 projecteur par rapport à sa position de référence 17. Cette information sur la position extrême des pôles de l'aimant 5 est suffisante. En effet, au démarrage du véhicule 12 et donc aussi à l'initialisation du dispositif 1 projecteur, il est suffisant de savoir dans quel sens le moteur doit tourner pour faire revenir le dispositif 1 projecteur dans la zone linéaire 203. Dans la zone linéaire 203, il est alors facile de faire correspondre la position du dispositif 1 projecteur avec une position 205 de référence. Dans un exemple, on définit un écart par rapport à la position 205 de référence et on fait revenir le dispositif 1 projecteur dans cette position initiale lors de la mise sous tension.

La position de référence 205 correspond à la position 17 de la figure 1. Dans un exemple, la position 205 de référence vaut zéro degrés. Toutefois, cette valeur d'angle pourrait être positive non nulle ou négative non nulle si le dispositif 1 projecteur présente un décalage angulaire avec le capteur 6. Pour un tel décalage, la valeur de l'angle entre la position de référence du dispositif 1 projecteur et la position de référence intrinsèque au capteur est non nulle.

On utilise dans une réalisation particulière le capteur 6 à effet Hall. Pourtant, tout autre type de capteur présentant une caractéristique semblable convient pour faciliter et écourter la phase d'initialisation du dispositif 1 projecteur.

Le mécanisme de rotation du dispositif projecteur s'active à partir d'une vitesse de trente kilomètres par heures. Les routes où le véhicule évolue à cette vitesse présentent des courbures pour lesquelles une amplitude de dix degrés suffit en général.

Ainsi, dans la plupart des cas, au démarrage du véhicule, le dispositif 1 projeteur se trouve déjà dans une position associée à la zone 203 linéaire du capteur 6. Or la position 17 de référence est avantageusement associée à un angle appartenant à la zone 203 linéaire. Le trajet pour atteindre la position de référence est donc limité. La durée de la phase d'initialisation du dispositif 1 projecteur, liée entre autre au trajet à parcourir pour atteindre la position de référence, est donc limitée. Le dispositif 1 projecteur est rapidement disponible.

Dans le cas où on souhaite augmenter la partie 203 linéaire de la caractéristique du capteur 6, il est possible éventuellement d'utiliser deux capteurs 6 à effet Hall. L'ajout d'un second capteur 6 a pour effet d'augmenter ou de rallonger la partie 203 linéaire de la caractéristique correspondant au deux capteurs mis en présence. On pourrait aussi imaginer une partie linéaire comprise entre moins quinze degrés et plus quinze degrés ou entre zéro degré à quatre-vingt-dix degrés si on utilise plus de deux capteurs.

En faisant varier la valeur de l'aimant 5 utilisé et fixé à l'arbre 3, il est aussi possible d'augmenter ou de diminuer la linéarité de la partie 203.

Basés sur l'influence des variations de champs sur un conducteur parcouru par un courant, les capteurs 6 à effet Hall sont des capteurs sans contact. L'absence de contact limite l'usure de ces capteurs en supprimant les frottements mécaniques entre pièces et en limitant les risques de mauvais contact. En mettant en oeuvre ces capteurs, le dispositif 1 projecteur devient donc plus robuste.

La linéarité de la partie 203 de la caractéristique du capteur 6 à effet Hall n'est pas essentielle et indispensable. Certes, cette linéarité facilite les calculs pour mesurer les déplacement en rotation du dispositif 1 projecteur et pour faire revenir ce dispositif 1 dans la position 17 initiale. Pourtant, on pourrait imaginer l'utilisation d'un capteur 6 présentant une caractéristique ou une partie monotone croissante ou monotone décroissante. En effet, une bijection sur la plage 203 de forte sensibilité est suffisante. Un capteur avec une caractéristique présentant une bijection permet d'associer à une valeur délivrée en sortie 18 par le capteur 6 une et une seule valeur de la position du dispositif 1 projecteur.

La partie linéaire ou bijective de la caractéristique permet un déplacement unique. Pour ce déplacement unique, un déplacement angulaire peut être déterminé. Par exemple, dans une phase d'initialisation du système, le dispositif 1 projecteur se trouve dans une position extrême correspondant à la zone 202 ou 204. Le moteur entraînant l'axe 3 de ce module tourne alors de manière à faire revenir l'axe 3 du module dans la partie linéaire 203 du capteur 6. On peut ensuite facilement déterminer ou mesurer un écart angulaire unique entre le dispositif 1 projecteur et la position de référence 205. De cet mesure angulaire, on déduit un déplacement angulaire unique afin de ramener le dispositif 1 projecteur dans la position 17 de référence.

La précision de ce capteur 6 à effet Hall utilisé dans le dispositif 1 projecteur est de plus ou moins 0, 3° dans la partie linéaire 203, c'est-à-dire dans la plage 14 de forte sensibilité.

Dans un exemple de réalisation, on met en oeuvre un dispositif 1 utilisant un capteur 6 à effet Hall programmable. Ce capteur à effet Hall comporte un registre programmable. Cette sonde 6 à effet Hall programmable permet de mémoriser la position de référence 205 à l'intérieure d'une mémoire de cette sonde. Dans un exemple, ce capteur à effet Hall peut même exécuter un programme de calcul prenant comme entrées les valeurs qu'il produit.

Toutefois, il est possible d'envisager l'utilisation d'un moyen programmable indépendant permettant de mémoriser des positions associées au déplacement du dispositif 1 projecteur.

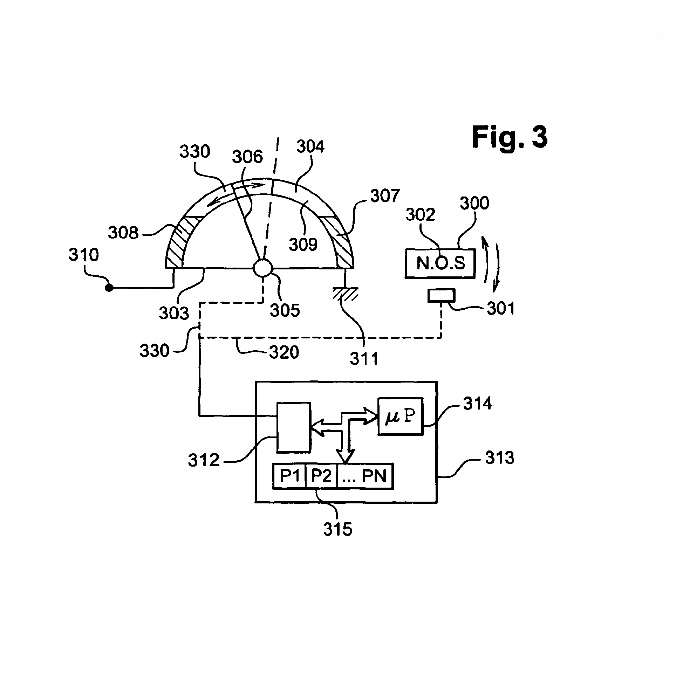

La figure 3 illustre justement des variantes de réalisation de l'invention et introduit par ailleurs l'utilisation d'un moyen 313 programmable pouvant être un microcontrôleur 313 ou un microprocesseur 314 comportant des mémoires 312 et 315.

La réalisation préférée utilise un aimant 300 combiné avec une sonde à effet Hall 301. L'aimant 300 en rotation tourne avec l'axe 302. Cet axe 302 correspond à l'axe 3 vu de dessus. La rotation de l'axe 302 engendre donc une variation de tension en sortie du capteur 301 liée à la variation de champs magnétique induit par la rotation de l'aimant 300.

La figure 3 présente aussi une variante à cette réalisation. En effet, un moyen de mesure 303 représenté schématiquement comporte une résistance 304 variable. Cette résistance 304 variable est arrangée autour d'un axe 305 : la résistance 304 variable décrit un arc de cercle autour de l'axe 305. Un curseur 306 est emmené par l'axe 305 et ce curseur 306 est en contact avec une partie de l'axe 305. La résistance 304 variable possède une première valeur de tolérance pour un ensemble de positions du curseur 306 correspondant aux plages 15 et 16 en bord de gamme 13 et une deuxième valeur de tolérance inférieure à la première valeur pour un deuxième ensemble de positions du curseur 306 correspondant à la plage 14 de forte sensibilité.

Dans un exemple, la résistance 304 variable est argentée sur les plages 15 et 16 en bord de gamme 13 alors qu'elle est dorée sur la plage 14 de forte sensibilité. La partie 330 dorée possède une meilleure sensibilité pour les mesures que les parties 307 et 308 argentées. La résistance 304 variable pourrait être alimentée entre deux bornes 310 et 311. Dans un exemple, la borne 310 est reliée à plus six Volts et la borne 311 est reliée à la masse. La tension entre le curseur 306 et la masse ne correspond qu'à une partie de la tension disponible entre les deux bornes 310 et 311. L'association du curseur 306 et de la résistance 304 variable jouent en quelque sorte le rôle d'un rhéostat en raison du contact mobile que le curseur 306 effectue avec la surface extérieure de la résistance variable 304.

En fonction de la tension observable sur le curseur 306, on peut déterminer la position de ce curseur 306 et donc en déduire le déplacement en rotation de l'arbre. Dans un exemple, on peut choisir la position axiale du curseur sur la résistance variable 304 comme position de référence. Dans l'exemple de la figure, cette position centrale correspond à une tension de trois volts: la position centrale du curseur coupe la résistance 304 en deux résistance de même valeur. Il est aussi possible de choisir une position 17 de référence qui ne soit pas centrale mais qui corresponde à une position 10 axiale du dispositif 1 projecteur du véhicule 12.

Afin de calculer des déplacements angulaires et de ramener de manière encore plus précise le dispositif 1 projecteur dans sa position 17 de référence, on peut utiliser un moyen 313 de programmation. Le moyen 313 de programmation peut être soit un microcontrôleur 313, soit l'association d'un microprocesseur 314 avec des mémoires distinctes 312 et 313 respectivement tampon et de programme. Le capteur 301 à effet Hall ou le curseur 306 du moyen de mesure 303 sont reliés à une mémoire 312 du moyen 313 de programmation. Le capteur 301 ou le curseur 306 associé à la résistance 304 sont relié à cette mémoire via respectivement les connexions 320 et 330. Dans la pratique, on utilise soit le capteur 301 à effet Hall avec le microcontrôleur 313, soit la résistance 304 et le curseur 306 avec le microcontrôleur 313. Ce microcontrôleur 313 peut garder en mémoire la position 17 de référence de capteurs. Le capteur 303 comprenant une résistance 304 variable 304, le déplacement du curseur 306 est linéaire par rapport à la tension observable sur ce même curseur 306. Sur toute la gamme 13 de valeurs associées au déplacement du dispositif 1 projecteur, une relation de proportionnalité existe entre la valeur prise par une partie de la résistance 304 et la tension à ses bornes pour un courant constant.

Dans un exemple particulier, le microcontrôleur 313 peut gérer la pente de la partie 203 linéaire de la caractéristique des capteurs 304 ou 301 branchés en entrée de la mémoire 312 tampon. Par ailleurs, à partir de leur position 17 de référence, le microcontrôleur 313 peut calculer un déplacement à partir d'un programme P1, P2, PN rentré dans ces mémoires programme 313.

On peut imaginer un programme mettant en correspondance le curseur 306 et sa position avec toutes les valeurs possibles. Cette étape remplacerait la linéarité à partir de laquelle on peut déterminer précisément la position de l'axe 305. Cette table donnerait des correspondances ou des valeurs produites par le moyen de mesure et la position effective de l'axe.

Ce microcontrôleur 303 ou tout simplement un capteur 301 à effet Hall programmable peut permettre aussi de communiquer au conducteur du véhicule des défaillances éventuelles du système. Le capteur 301 ou le microcontrôleur 303 peut par exemple faire remonter des signaux d'état ou d'alarme vers un tableau de bord du conducteur.

L'utilisation d'un tel microprocesseur permet une certaine sécurité de fonctionnement. Son utilisation permet de limiter au maximum l'écart entre le déplacement de l'axe 305 ou 302 et la position effective de l'axe. Ce microcontrôleur 313 peut aussi mettre en oeuvre ou exécuter des algorithmes permettant un asservissement en position du dispositif 1 projecteur 305 lorsque ce dispositif 1 projecteur est utilisé avec le moteur 21 pas à pas par exemple. Le microprocesseur pourrait permettre d'ajuster la position actuelle du curseur 306 avec la position désirée par l'utilisateur ou avec une position optimale imposée pour un éclairage de route.

## Revendications

1. Dispositif (1) projecteur muni d'un système de détermination de position ou de variation de position du dispositif projecteur autour d'un axe (3) en rotation, ce système comportant un moyen (6) de mesure pour déterminer des valeurs de position sur la totalité d'une gamme (13) de valeurs associées à la position du dispositif (1) projecteur, **caractérisé en ce que** le moyen (6) de mesure comporte, dans la gamme (13) de valeurs associées à la position du dispositif (1) projecteur, une plage (14) de forte sensibilité et au moins une plage (15) de faible sensibilité.

2. Dispositif selon la revendication 1 **caractérisé en ce que** la plage (14) de forte sensibilité correspond à un voisinage d'une position (10) axiale du dispositif projecteur.

3. Dispositif selon l'une des revendications 1 à 2 **caractérisé en ce que** la plage (15) de faible sensibilité correspond à un ensemble de positions en bord de gamme (13).

4. Dispositif selon l'une des revendications 1 à 3 **caractérisé en ce que** le moyen (6) de mesure produit dans la plage (14) de forte sensibilité des valeurs de position linéairement dépendantes de la position en rotation du dispositif (1) projecteur.

5. Dispositif selon l'une des revendications 1 à 4 **caractérisé en ce que** le moyen (6) de mesure possède une position (17) de référence dans la plage (14) de forte sensibilité.

6. Dispositif selon la revendication 5 **caractérisé en ce que** la plage (14) de forte sensibilité du moyen de mesure correspond à un mouvement (2) du dispositif projecteur entre plus ou moins cinq degrés autour de la position (17) de référence.

7. Dispositif selon l'une des revendications 1 à 6 **caractérisé en ce que** le moyen (6) de mesure possède une précision de plus ou moins 0.3 degrés dans la plage de forte sensibilité.

8. Dispositif selon l'une des revendications 1 à 7 **caractérisé en ce que** le moyen (6) de mesure est un capteur (6) à effet Hall.

9. Dispositif selon la revendication 8 **caractérisé en ce que** le capteur (6) à effet Hall comporte un registre programmable.

10. Dispositif selon l'une des revendications 3 à 7 **caractérisé en ce que** le moyen (6) de mesure comporte une résistance (304) variable arrangée autour de l'axe (305) de rotation, dont la valeur varie avec un mouvement d'un curseur (306) emmené par l'axe (305) de rotation, la résistance variable possédant une première valeur de tolérance pour un premier ensemble de positions du curseur (306) correspondant aux plages (15, 16) en bord de gamme et une deuxième valeur de tolérance inférieure à la première valeur pour un deuxième ensemble de positions du curseur correspondant à la plage (14) de forte sensibilité.

11. Dispositif selon l'un des revendications 1 à 10 **caractérisé en ce que** le moyen (6) de mesure est associé à un module (313) programmable comportant un microprocesseur (314) avec des mémoires (312, 315) ou un microcontrôleur (313), une des mémoires (312, 315) du microprocesseur (314) ou du microcontrôleur (313) gardant en mémoire la position (17) de référence et/ou une table donnant des correspondances entre des valeurs produites par le moyen (6) de mesure et la position du dispositif (1) projecteur.

12. Dispositif selon l'une des revendications 1 à 11 **caractérisé en ce que** l'axe (3) de rotation du dispositif (1) projecteur est horizontal.

13. Dispositif selon l'une des revendications 1 à 11 **caractérisé en ce que** l'axe (3) de rotation du dispositif (1) projecteur est vertical.

14. Véhicule automobile **caractérisé en ce qu'**il comporte un dispositif (1) projecteur selon l'une au moins des revendications précédentes.

## Claims

1. Headlight device (1) provided with a system for determination of position or variation of position of the headlight device around a rotational shaft (3), this system comprising a measurement means (6) for determination of the position values, over the entire range of values (13) associated with the position of the headlight device (1), **characterised in that**, in the range of values (13) associated with the position of the headlight device (1), the measurement means (6) comprises an area (14) of high sensitivity, and at least one area (15) of low sensitivity.

2. Device according to claim 1, **characterised in that** the area (14) of high sensitivity corresponds to the vicinity of an axial position (10) of the headlight device.

3. Device according to one of claims 1 or 2, **characterised in that** the area (15) of low sensitivity corresponds to a set of positions at the edge of the range (13).

4. Device according to one of claims 1 to 3, **characterised in that** the measurement means (6) produces in the area (14) of high sensitivity position values which are linearly dependent on the position in rotation of the headlight device (1).

5. Device according to one of claims 1 to 4, **characterised in that** the measurement means (6) has a reference position (17) in the area (14) of high sensitivity.

6. Device according to claim 5, **characterised in that** the area (14) of high sensitivity of the measurement means corresponds to a movement (2) of the headlight device between more or less five degrees around the reference position (17).

7. Device according to one of claims 1 to 6, **characterised in that** the measurement means (6) has accuracy of more or less 0.3 degrees in the area of high sensitivity.

8. Device according to one of claims 1 to 7, **characterised in that** the measurement means (6) is a Hall-effect sensor (6).

9. Device according to claim 8, **characterised in that** the Hall-effect sensor (6) comprises a programmable register.

10. Device according to one of claims 3 to 7, **characterised in that** the measurement means (6) comprises variable resistance (304) which is provided around the rotational shall (305), the value of which varies with movement of a slide (306) which is drawn by the rotational shaft (305), the variable resistance having a first tolerance value for a first set of positions of the slide (306), corresponding to the areas (15, 16) at the edge of the range, and a second tolerance value which is lower than the first value, for a second set of positions of the slide, corresponding to the area (14) of high sensitivity.

11. Device according to one of claims 1 to 10, **characterised in that** the measurement means (6) is associated with a programmable module (313) comprising a microprocessor (314) with memories (312, 315) or a microcontroller (313), one of the memories (312, 315) of the microprocessor (314) or of the microcontroller (313) retaining in its memory the reference position (17) and/or a table providing the correspondences between values produced by the measurement means (6) and the position of the headlight device (1).

12. Device according to one of claims 1 to 11, **characterised in that** the rotational shaft (3) of the headlight device (1) is horizontal.

13. Device according to one of claims 1 to 11, **characterised in that** the rotational shaft (3) of the headlight device (1) is vertical.

14. Motor vehicle, **characterised in that** it comprises a headlight device (1) according to at least one of the preceding claims.

## Patentansprüche

1. Scheinwerfer (1), der mit einem System zur Bestimmung oder Änderung der Stellung des Scheinwerfers um eine Drehachse (3) versehen ist, wobei das System ein Messmittel (6) aufweist, um Positionswerte über einen gesamten der Stellung des Scheinwerfers (1) zugeordneten Wertebereich (13) zu bestimmen,
**dadurch gekennzeichnet, dass** das Messmittel (6) in dem der Stellung des Scheinwerfers (1) zugeordneten Wertebereich (13) einen Bereich (14) mit hoher Empfindlichkeit und wenigstens einen Bereich (15) mit geringer Empfindlichkeit aufweist.

2. Scheinwerfer nach Anspruch 1,
**dadurch gekennzeichnet, dass** der Bereich (14) mit hoher Empfindlichkeit einer Nachbarschaft zu einer axialen Stellung (10) des Scheinwerfers entspricht.

3. Scheinwerfer nach einem der Ansprüche 1 bis 2,
**dadurch gekennzeichnet, dass** der Bereich (15) mit geringer Empfindlichkeit einer Reihe von Stellungen am Rand des Wertebereichs (13) entspricht.

4. Scheinwerfer nach einem der Ansprüche 1 bis 3,
**dadurch gekennzeichnet, dass** das Messmittel (6) im Bereich (14) mit hoher Empfindlichkeit Positionswerte erzeugt, die von der Drehstellung des Scheinwerfers (1) linear abhängig sind.

5. Scheinwerfer nach einem der Ansprüche 1 bis 4,
**dadurch gekennzeichnet, dass** das Messmittel (6) im Bereich (14) mit hoher Empfindlichkeit eine Bezugsposition (17) aufweist.

6. Scheinwerfer nach Anspruch 5,
**dadurch gekennzeichnet, dass** der Bereich (14) mit hoher Empfindlichkeit des Messmittels einer Bewegung (2) des Scheinwerfers zwischen ±5 Grad um die Bezugsposition (17) entspricht.

7. Scheinwerfer nach einem der Ansprüche 1 bis 6,
**dadurch gekennzeichnet, dass** das Messmittel (6) im Bereich mit hoher Empfindlichkeit eine Genauigkeit von ±0,3 Grad aufweist.

8. Scheinwerfer nach einem der Ansprüche 1 bis 7,
**dadurch gekennzeichnet, dass** das Messmittel (6) ein Halleffekt-Sensor (6) ist.

9. Scheinwerfer nach Anspruch 8,
**dadurch gekennzeichnet, dass** der Halleffekt-Sensor (6) ein programmierbares Register hat.

10. Scheinwerfer nach einem der Ansprüche 3 bis 7,
**dadurch gekennzeichnet, dass** das Messmittel (6) einen um die Achse (305) herum angeordneten Regelwiderstand (304) aufweist, dessen Wert sich bei einer Bewegung eines von der Drehachse (305) mitgeführten Cursors (306) ändert, wobei der Regelwiderstand einen ersten Toleranzwert für eine erste Gruppe von Positionen des Cursors (306) aufweist, die den Bereichen (15, 16) am Rand des Wertebereichs entspricht, sowie einen zweiten Toleranzwert kleiner als der erste Wert für eine zweite Gruppe von Positionen des Cursors, die dem Bereich (14) mit hoher Empfindlichkeit entspricht.

11. Scheinwerfer nach einem der Ansprüche 1 bis 10,
**dadurch gekennzeichnet, dass** das Messmittel (6) einem programmierbaren Modul (313) zugeordnet ist, das einen Mikroprozessor (314) mit Speichern (312, 315) oder einen Mikrocontroller (313) umfasst, wobei einer der Speicher (312, 315) des Mikroprozessors (314) oder des Mikrocontrollers (313) die Bezugsposition (17) und/oder eine Tabelle speichert, die Entsprechungen zwischen den vom Messmittel (6) erzeugten Werten und der Stellung des Scheinwerfers (1) angibt.

12. Scheinwerfer nach einem der Ansprüche 1 bis 11,
**dadurch gekennzeichnet, dass** die Drehachse (3) des Scheinwerfers (1) horizontal ist.

13. Scheinwerfer nach einem der Ansprüche 1 bis 11,
**dadurch gekennzeichnet, dass** die Drehachse (3) des Scheinwerfers (1) vertikal ist.

14. Kraftfahrzeug,
**dadurch gekennzeichnet, dass** es einen Scheinwerfer nach wenigstens einem der vorhergehenden Ansprüche aufweist.
